# DEMANDE DE BREVET EUROPEEN

(11) **EP 0 703 479 A1**
(43) Date de publication de la demande: **27.03.1996**
(21) Numéro de dépôt: 95402108.5
(22) Date de dépôt: 19.09.1995
(51) Int. Cl.: G02B 6/44

(54) **Câble à fibres optiques**

(30) Priorité: 23.09.1994 FR 9411400
(71) Demandeur: ALCATEL CABLE, F-92100 Clichy (FR)
(72) Inventeur: Carratt, Michel, F-78800 Houilles (FR); De Vecchis, Michel, F-95490 Vaureal (FR)
(74) Mandataire: Pothet, Jean Rémy Emile Ludovic

(57) **Abrégé**

La présente invention concerne un câble à fibres optiques comprenant une pluralité de fibres optiques (3) réparties en modules (2), chaque module étant enveloppé d'une gaine de maintien (4) en contact avec les fibres optiques extérieures (3B) du module (2) de manière à enserrer les fibres optiques contenues dans le module pour les coupler entre elles, l'ensemble des modules (2) étant disposé dans une enveloppe (5) en un matériau isolant, cette enveloppe (5) étant en contact avec les modules extérieurs (2B) de l'ensemble de modules de manière à former un assemblage compact de tous les modules (2),
caractérisé en ce que chaque fibre optique (3) a un diamètre de champ de mode compris entre 7 et 9 µm vers 1550 nm, et une longueur d'onde de coupure inférieure ou égale à 1,35 µm, et en ce qu'elle est munie, au-dessus de sa gaine optique, d'un revêtement sensiblement hermétique.

## Description

La présente invention concerne un câble à fibres optiques.

Plus particulièrement, elle concerne un câble à fibres optiques du type de celui décrit dans la demande de brevet EP-0 468 878 ou dans l'article intitulé " The microsheath cable: a novel design of ultralightweight single mode optical cable for low cost subscriber loop ",International Wire & Cable Symposium Proceedings 1991, c'est-à-dire un câble à fibres optiques ayant une très forte densité de fibres optiques et destiné notamment à être utilisé dans des réseaux de distribution locaux. La structure d'un tel câble sera dénommée dans toute la suite " structure microgaine ".

Un câble à structure microgaine comprend une pluralité de fibres optiques réparties en groupes ou modules ; dans certains de ces modules, il se peut que des fibres optiques, dites fibres optiques intérieures, soient entourées d'autres fibres optiques, et que d'autres, dites fibres optiques extérieures, soient directement en contact avec une gaine de maintien enveloppant chacun des modules. Les gaines de maintien enserrent ainsi les fibres optiques contenues dans chaque module pour les coupler mécaniquement entre elles. L'ensemble des modules est disposé dans une enveloppe en un matériau isolant qui est en contact avec les modules extérieurs de l'ensemble de modules de manière à former un assemblage compact de ces derniers. Ainsi, lorsqu'un effort est appliqué au câble, il est transmis aux fibres optiques et réparti uniformément entre elles.

Le problème majeur posé par les câbles à structure microgaine réside dans le fait que la répartition des efforts appliqués au câble entre toutes les fibres optiques entraîne une dégradation d'une part de leurs propriétés de transmission, notamment du fait qu'elles sont soumises à de nombreuses courbures et microcourbures dues à leur serrage dans les gaines de maintien, et d'autre part de leurs caractéristiques mécaniques. On a constaté que, pour éviter de telles dégradations, il est nécessaire, notamment lorsque le câble doit être installé en grandes longueurs, de pourvoir la structure d'éléments de renfort et de découpler mécaniquement les fibres de chaque module de la gaine de maintien de ce dernier, ce qui revient à laisser les fibres optiques libres dans chaque module, et donc à diminuer la compacité du câble réalisé. En outre, les courbures et microcourbures altèrent la durée de vie des fibres optiques.

La présente invention a pour but de résoudre ce problème, c'est-à-dire de mettre au point un câble à structure microgaine dans lequel il est possible de conserver une structure serrée des fibres optiques sans dégradation des performances de transmission de ces dernières ni de leurs caractéristiques mécaniques après installation.

La présente invention propose à cet effet un câble à fibres optiques comprenant une pluralité de fibres optiques réparties en modules, chacun desdits modules étant enveloppé d'une gaine de maintien en contact avec les fibres optiques extérieures dudit module de manière à enserrer lesdites fibres optiques contenues dans ledit module pour les coupler mécaniquement entre elles, l'ensemble desdits modules étant disposé dans une enveloppe en un matériau isolant, ladite enveloppe étant en contact avec les modules extérieurs dudit ensemble de modules de manière à former un assemblage compact de tous lesdits modules,
caractérisé en ce que chacune desdites fibres optiques a un diamètre de champ de mode compris entre 7 et 9 µm vers 1550 nm, et une longueur d'onde de coupure inférieure ou égale à 1,35 µm, et en ce qu'elle est munie, au-dessus de sa gaine optique, d'un revêtement sensiblement hermétique; ce revêtement sensiblement hermétique peut être entouré éventuellement d'un revêtement en un matériau plastique ou thermodurcissable tel qu'une résine, dénommé de manière générale revêtement extérieur. Ce revêtement extérieur sera de préférence mince.

Les courbures et les microcourbures entraînent pour les fibres optiques qui y sont soumises une augmentation des pertes de transmission due à un accroissement de l'atténuation.

En choisissant un diamètre de champ de mode compris entre 7 et 9 µm vers 1550 nm, et une longueur d'onde de coupure de chacune des fibres optiques inférieure ou égale à 1,35 µm, on assure une meilleure transmission, c'est-à-dire que l'on diminue les pertes de transmission, et l'on évite donc les conséquences préjudiciables des courbures et microcourbures.

Les efforts mécaniques de traction ou de compression appliqués au câble entraînent pour les fibres une dégradation de leurs propriétés mécaniques et ainsi une diminution de leur durée de vie.

En dotant les fibres optiques d'un revêtement hermétique mince (qui n'augmente par conséquent pas leur encombrement), on augmente leur durée de vie et leurs caractéristiques mécaniques en service et l'on évite donc les conséquences préjudiciables des contraintes engendrées par ce type de câbles.

L'utilisation de fibres optiques ayant de telles propriétés dans un câble à structure microgaine permet donc de rendre les fibres optiques nettement moins sensibles aux courbures et microcourbures, ce qui autorise leur serrage au moyen des gaines de maintien, et permet éventuellement de se passer de l'utilisation d'éléments de renfort servant à reprendre les efforts appliqués au câble. Le câble selon l'invention peut donc être nettement plus compact que celui de l'art antérieur, de sorte qu'il est peu encombrant et particulièrement adapté à une utilisation dans les réseaux de distribution.

La réalisation d'un revêtement extérieur en un matériau plastique ou thermodurcissable autour de chaque fibre optique a pour effet d'une part de protéger le traitement de surface lorsque cela est nécessaire, et d'autre part de permettre une identification de la fibre ainsi revêtue, les combinaisons de couleurs disponibles étant plus élevées lorsque ce revêtement extérieur est en un matériau plastique extrudé que pour la coloration d'un revêtement extérieur de fibre en résine.

On notera que l'extrusion d'un revêtement extérieur en un matériau plastique sur la fibre est rendue possible par le fait que cette dernière est moins sensible aux microcourbures.

D'autres caractéristiques et avantages de la présente invention apparaîtront dans la description suivante d'un mode de réalisation d'un câble selon l'invention, donné à titre illustratif et nullement limitatif.

Dans les figures suivantes:
- la figure 1 est une vue en coupe transversale d'un câble selon l'invention,
- la figure 2 est une vue en coupe transversale d'une fibre optique utilisée dans un câble selon l'invention,
- les figures 3 et 4 donnent deux exemples de profils d'indice pour des fibres utilisées dans un câble selon l'invention.

Dans toutes ces figures, les éléments communs portent les mêmes numéros de référence.

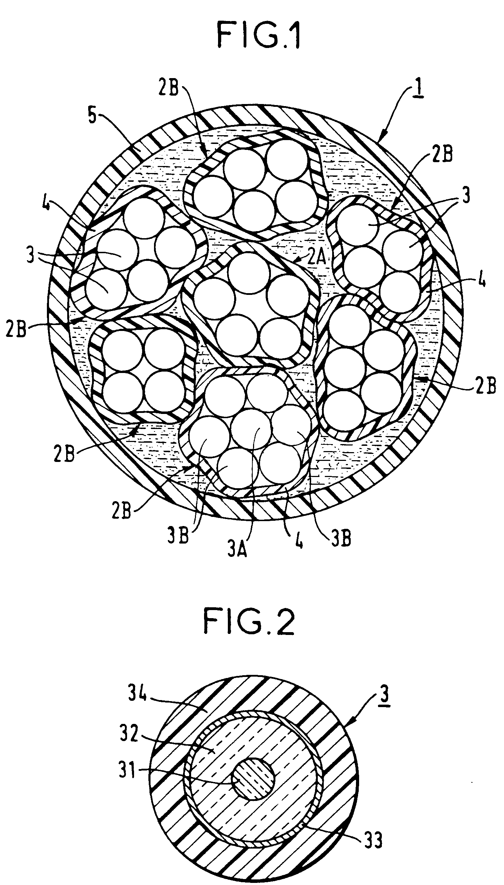

On voit en figure 1 un câble 1 selon l'invention, qui comprend plusieurs modules 2 de fibres optiques 3.

Chaque module 2 comporte une pluralité de fibres optiques 3 ; dans certains des modules 2, il se peut que des fibres optiques, référencées 3A, dites intérieures, soient entourées d'autres fibres optiques 3B, dites extérieures, qui elles sont en contact avec une gaine de maintien 4 du module 2. La gaine de maintien 4 enserre les fibres optiques 3 de manière à réaliser un assemblage compact de ces dernières qui sont toutes, à l'intérieur d'un module 2, en contact les unes avec les autres, de sorte qu'elles sont couplées entre elles et avec la gaine de maintien 4.

Cette gaine de maintien 4 peut être en tout matériau plastique adapté. Elle est de préférence constituée d'un matériau ayant un module d'élasticité de l'ordre de 70 daN/mm et ayant un faible coefficient de glissement sur les fibres optiques 3, afin de réaliser un bon serrage ; ce matériau peut être par exemple une polyoléfine. L'épaisseur des gaines de maintien 4 est de préférence de l'ordre de 150 µm ; ainsi, leur encombrement est réduit et elles peuvent être facilement déchirées pour faciliter le raccordement. En outre, les gaines de maintien 4 permettent de protéger les fibres contre les efforts de contraction et de dilatation dus à des variations de température.

L'ensemble des modules 2 est disposé à l'intérieur d'une enveloppe de protection 5 en un matériau isolant qui les enserre de sorte qu'ils sont tous en contact les uns avec les autres, certains de ces modules 2 pouvant être intérieurs, comme le module 2A, et d'autres extérieurs, comme les modules 2B. L'enveloppe 5 a de préférence une bonne résistance mécanique (module d'élasticité élevé), bien que cela ne soit pas essentiel du fait des propriétés mécaniques accrues des fibres utilisées. Le matériau constituant l'enveloppe 5 peut être par exemple un matériau de la famille des polyoléfines.

D'autres enveloppes extérieures de protection (non représentées) peuvent être disposées autour de l'enveloppe 5.

Pour renforcer la tenue mécanique du câble 1, notamment lorsque ce dernier doit être tiré sur de grandes longueurs afin d'être installé dans des conduites, on peut noyer dans l'enveloppe 5 elle-même ou inclure dans l'espace délimité par cette dernière des éléments de renfort (non représentés) ayant un module d'élasticité élevé et un allongement à la rupture supérieur à celui des fibres optiques, ces éléments de renfort étant soit métalliques, soit diélectriques, par exemple sous forme de mèches de fibres de verre ou d'aramide.

Selon l'invention, chacune des fibres optiques 3 comprend (voir figure 2) un coeur optique 31 entouré d'une gaine optique 32, tous deux en un matériau à base de silice, la gaine optique 32 étant entourée d'un mince revêtement hermétique 33, d'épaisseur par exemple de l'ordre de 0,5 µm. Le revêtement hermétique 33 peut être constitué par exemple de carbone, de bore ou encore d'un dopage à base d'oxyde de titane de la gaine optique 32.

Toujours selon l'invention, chacune des fibres optiques 3 a un diamètre de champ de mode compris entre 7 et 9 µm vers 1550 nm, et une longueur d'onde de coupure inférieure ou égale à 1,35 µm, et de préférence voisine de 1,33 µm.

Bien entendu, les fibres optiques 3 peuvent fonctionner aussi bien à une longueur d'onde de 1310 nm qu'à une longueur d'onde de 1550 nm.

De manière optionnelle, chacune des fibres optiques 3 peut être en outre munie, sur le revêtement hermétique 33, d'un revêtement extérieur mince 34 soit en un matériau plastique appliqué par extrusion sur la fibre, soit en un matériau thermodurcissable tel qu'une résine appliquée par enduction sur la fibre. Ce revêtement extérieur peut porter des informations d'identification de la fibre optique, et notamment être coloré à cette fin. Le revêtement extérieur 34, optionnel, peut n'être utilisé que lorsqu'il est nécessaire de protéger le revêtement hermétique 33. Le choix d'un revêtement extérieur 34 mince permet également de limiter le niveau des courbures et des microcourbures appliquées à la fibre.

Grâce à la structure particulière des fibres optiques 3, qui leur permet de résister notamment aux courbures et microcourbures, et aux contraintes appliquées au câble bien mieux que les fibres connues actuellement, il est possible de réaliser la structure microgaine sans dégradation des performances de transmission. En effet, la structure des fibres optiques 3 leur permet de supporter la répartition uniforme entre elles des contraintes appliquées au câble 1. Notamment, les pertes dues au câblage pour un câble selon l'invention sont inférieures à 0,05 dB/km, alors que pour un câble de l'art antérieur, elles sont de l'ordre de 0,1 à 1 dB/km.

Un autre avantage du câble selon l'invention réside dans le fait qu'il n'est pas toujours nécessaire de disposer au-dessus du revêtement hermétique 33 un revêtement extérieur, ce qui d'une part diminue l'encombrement de la fibre optique et permet donc un accroissement de la densité du câble, et d'autre part réduit, à section du câble donnée, le poids de ce dernier (la proportion de silice par rapport à la proportion de matériau plastique dans une section donnée du câble diminue), ce qui le rend plus facile à tirer lors des opérations d'installation.

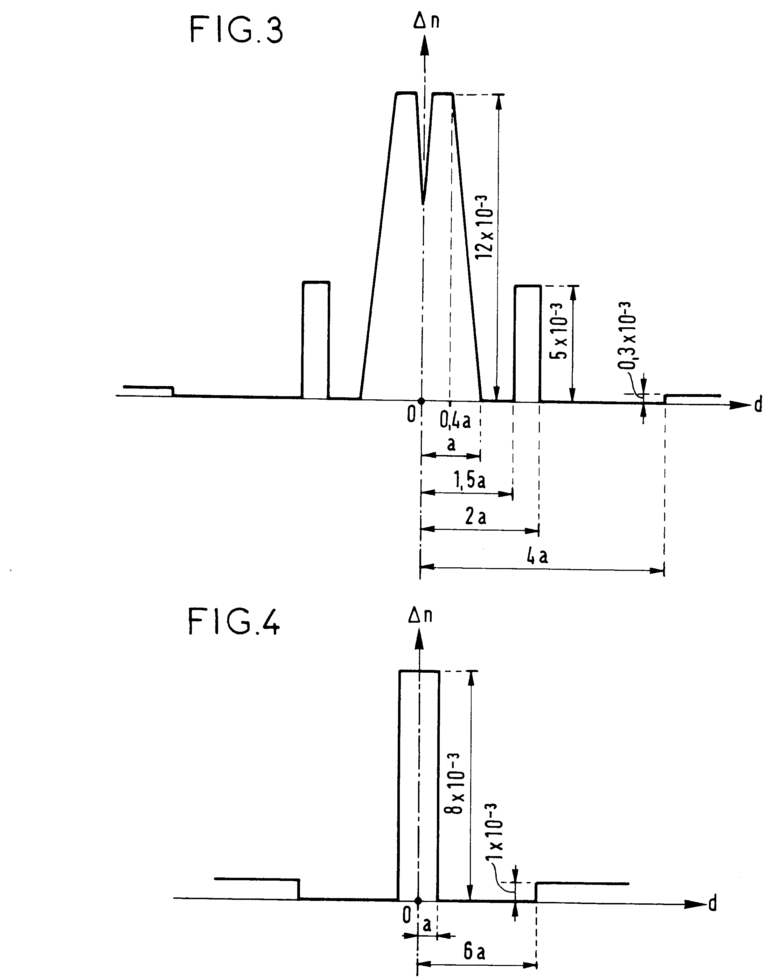

Deux exemples non limitatifs de profils d'indice permettant d'obtenir cette caractéristique sont montrés aux figures 3 et 4, où la différence Δn entre les indices de réfraction des différentes parties de la fibre optique et celui de la gaine entourant immédiatement le coeur est donnée en fonction de la distance d à l'axe de la fibre, a étant le rayon du coeur de la fibre optique.

On appelle de manière générale coeur optique la partie de la fibre optique qui transporte la majorité de l'énergie lumineuse, et gaine optique la partie de la fibre optique entourant le coeur optique.

A titre d'exemple de réalisation, on peut donner les indications de dimensions suivantes :
- diamètre de la fibre 3 au-dessus de la gaine optique 32 : 125 µm ± 3 µm
- épaisseur du revêtement de carbone 33: 0,5 µm
- épaisseur du revêtement extérieur 34: de l'ordre de 200 µm
- diamètre de champ de mode 2 Wₒ à 1550 nm : 7,5 µm ≦2 Wₒ ≦ 9 µm
- longueur d'onde de coupure λ_{c}: 1200 nm ≦λ_{c}≦1280 nm (λ_{c} est toujours inférieure ou égale à 1350 nm).

Bien entendu, l'invention n'est pas limitée au mode de réalisation qui vient d'être décrit.

En particulier, étant donné la très faible sensibilité des fibres optiques utilisées aux microcourbures et leur résistance accrue aux contraintes, on peut choisir de nombreux matériaux pour la gaine de maintien 4 et l'enveloppe 5. De préférence, on choisira pour la gaine de maintien 4 un matériau permettant de réaliser une fine gaine capable d'enserrer suffisamment les fibres optiques 3.

Les gaines de maintien des modules peuvent avoir des couleurs différentes pour permettre leur repérage aisé.

L'espace compris entre les modules 2 et l'enveloppe 5 peut être rempli avec un produit d'étanchéité, de même que l'espace libre entre les fibres à l'intérieur des modules 2.

Enfin, de nombreux aménagements peuvent être apportés sans sortir du cadre de l'invention.

## Revendications

**1/** Câble à fibres optiques comprenant une pluralité de fibres optiques réparties en modules, chacun desdits modules étant enveloppé d'une gaine de maintien en contact avec les fibres optiques extérieures dudit module de manière à enserrer lesdites fibres optiques contenues dans ledit module pour les coupler mécaniquement entre elles, l'ensemble desdits modules étant disposé dans une enveloppe en un matériau isolant, ladite enveloppe étant en contact avec les modules extérieurs dudit ensemble de modules de manière à former un assemblage compact de tous lesdits modules, caractérisé en ce que chacune desdites fibres optiques a un diamètre de champ de mode compris entre 7 et 9 µm vers 1550 nm, et une longueur d'onde de coupure inférieure ou égale à 1,35 µm, et en ce qu'elle est munie, au-dessus de sa gaine optique, d'un revêtement sensiblement hermétique.

**2/** Câble selon la revendication 1 caractérisé en ce que ledit revêtement sensiblement hermétique est entouré d'un revêtement extérieur en un matériau plastique ou thermodurcissable.

**3/** Câble selon l'une des revendications 1 ou 2 caractérisé en ce que ledit revêtement sensiblement hermétique est constitué de carbone.

**4/** Câble selon l'une des revendications 1 ou 2 caractérisé en ce que ledit revêtement sensiblement hermétique est constitué de bore.

**5/** Câble selon l'une des revendications 2 à 4 caractérisé en ce que ledit revêtement extérieur comprend des informations d'identification de chacune desdites fibres optiques.

**6/** Câble selon l'une des revendications 1 à 5 caractérisé en ce que lesdites fibres optiques sont des fibres optiques multicoeurs.

**7/** Câble selon l'une des revendications 1 à 6 caractérisé en ce qu'il comprend des éléments de renfort mécanique.
